**Europäisches Patentamt**

**European Patent Office**

**Office européen des brevets**

(19)

(11) Numéro de publication: **0 001 366**

**A1**

(12)

# DEMANDE DE BREVET EUROPEEN

(21) Numéro de dépôt: **78400101.8**

(22) Date de dépôt: **15.09.78**

(51) Int. Cl.²: **B 60 K 5/00**

(30) Priorité: **26.09.77 FR 7728908**

(43) Date de publication de la demande:
**04.04.79 Bulletin 79/7**

(84) Etats contractants désignés:
**BE CH DE GB LU NL SE**

(71) Demandeur: **SOCIETE D'ETUDE ET D'APPLICATION INDUSTRIELLE DE BREVETS (S E A B)**
**64, rue Pasteur**
**F-94800 Villejuif (Val-de-Marne)(FR)**

(72) Inventeur: **de la Poype, Roland**
**9, Avenue Milleret-de-Brou**
**F-75016 Paris(FR)**

(74) Mandataire: **Chevallier, Robert et al,**
**Cabinet BOETTCHER 23, rue La Boétie**
**F-75008 Paris(FR)**

(54) **Train avant simplifié à deux roues motrices pour véhicule automobile.**

(57) Une ossature 1 repose sur un carter 2 et elle est déportée fortement vers l'avant où elle supporte un pivot ayant un axe vertical 9; celui-ci passe par le centre de gravité d'un moteur 11 et sur la ligne joignant deux roues 4 montées à l'extrémité de deux bras espacés 12 s'étendant vers l'avant à partir du carter 2.

L'invention est applicable aux véhicules simplifiés à usage urbain.

Fig.1

EP 0 001 366 A1

Croydon Printing Company Ltd.

- 1 -

## Train avant simplifié à deux roues motrices pour véhicule automobile

L'invention se rapporte aux véhicules automobiles de petite taille et à quatre roues destinés principalement aux déplacements individuels dans les villes.

On connaît déjà dans le commerce de nombreux types de véhicules à usage individuel et qui, cependant, ne sont pas d'un emploi généralisé. Ceci provient, le plus souvent, de ce que les véhicules connus, bien que de construction parfois sommaire, ont un prix encore trop élevé pour les services qu'ils sont en mesure de rendre.

La difficulté de réduire le coût d'un tel véhicule, tout en obtenant encore une robustesse et des performances satisfaisantes, est due aux organes mécaniques de transmission de couple et de direction. L'utilisation d'un moteur monté à l'avant et entraînant les roues avant apporte une simplification certaine; elle est appliquée depuis longtemps mais elle a l'inconvénient d'apporter aussi une complication à la commande de direction de ces roues avant qui sont en même temps les roues directrices. Une solution connue qui a été adoptée sur certains véhicules consiste à donner à ce dernier trois roues seulement dont une, située à l'avant, est à la fois motrice et directrice. On bénéficie de la possibilité de supprimer le différentiel mais on rencontre alors un autre inconvénient qui est le manque de stabilité du véhicule dans son ensemble; ce défaut est particulièrement dangereux avec un véhicule simplifié, dont le poids propre est faible, dont la voie des roues arrière est réduite et auquel on demande de manoeuvrer en prenant des virages ayant de courts rayons de courbure.

Le but principal de l'invention est d'apporter un train avant à deux roues motrices et directrices pour véhicule automobile à quatre roues ayant une conception simplifiée qui diminue notablement le coût de la fabrication et de l'entretien, ces deux roues avant ayant une voie dont l'importance est substantiellement égale à la largeur du véhicule.

On atteint ce but selon l'invention avec un train avant comprenant une ossature qui repose à sa partie inférieure sur le carter d'un essieu et qui est déportée à sa partie supérieure en avant de l'essieu; cette partie supérieure est munie d'un pivot de direction à axe substantiellement vertical et les roues sont montées chacune respectivement sur un bras s'étendant vers l'avant à partir du carter de l'essieu. Le moteur est fixé à l'ossature à l'intérieur du volume limité par celle-ci et par les roues et il est accouplé fonctionnellement à un différentiel incorporé à l'essieu. L'agencement général est tel que l'axe de pivotement du pivot passe sensiblement par le centre de gravité du moteur et rencontre en son milieu la ligne droite qui s'étend entre les points de contact avec le sol de chacune des deux roues.

Selon une autre caractéristique de l'invention, il est avantageux de munir le pivot de direction d'une couronne dentée de direction faisant partie d'un organe de direction qui comprend un élément de commande de cette couronne dentée; cet élément de commande est alors réuni au volant de direction du véhicule.

De préférence, le pivot de direction est creux et il sert de passage aux fils et aux câbles de commande entre le moteur et l'intérieur du véhicule.

De préférence encore, l'organe de direction est contenu dans un boîtier muni de moyens de fixation et ces derniers constituent les seuls moyens de solidarisation du train avant et du châssis du véhicule.

Dans un mode de réalisation de l'invention, chaque bras est monté sur le carter de l'essieu avec une possibilité d'oscillation dans un plan perpendiculaire à cet essieu et des organes de suspension sont disposés entre chaque bras d'une part et l'ossature d'autre part. De préférence, chaque bras a un prolongement vers l'arrière au-delà de l'essieu; un ressort de compression est monté en avant de l'essieu entre chaque bras et l'ossature et un amortisseur est monté en arrière de l'essieu entre le prolongement de chaque bras et l'ossature.

Pour mieux faire apprécier l'invention, on donnera maintenant une description d'un exemple de réalisation. On se reportera aux dessins annexés dans lesquels :

la figure 1 est une vue de côté en élévation d'un train avant conforme à l'invention ;
la figure 2 est une vue de l'arrière du train de la figure 1 ;
la figure 3 est une vue partielle de dessus d'un bras articulé sur le carter de l'essieu du train de la figure 1 ;

la figure 4 est une vue de dessus en coupe par un plan horizontal d'une variante d'une partie de la réalisation des figures 1 à 3.

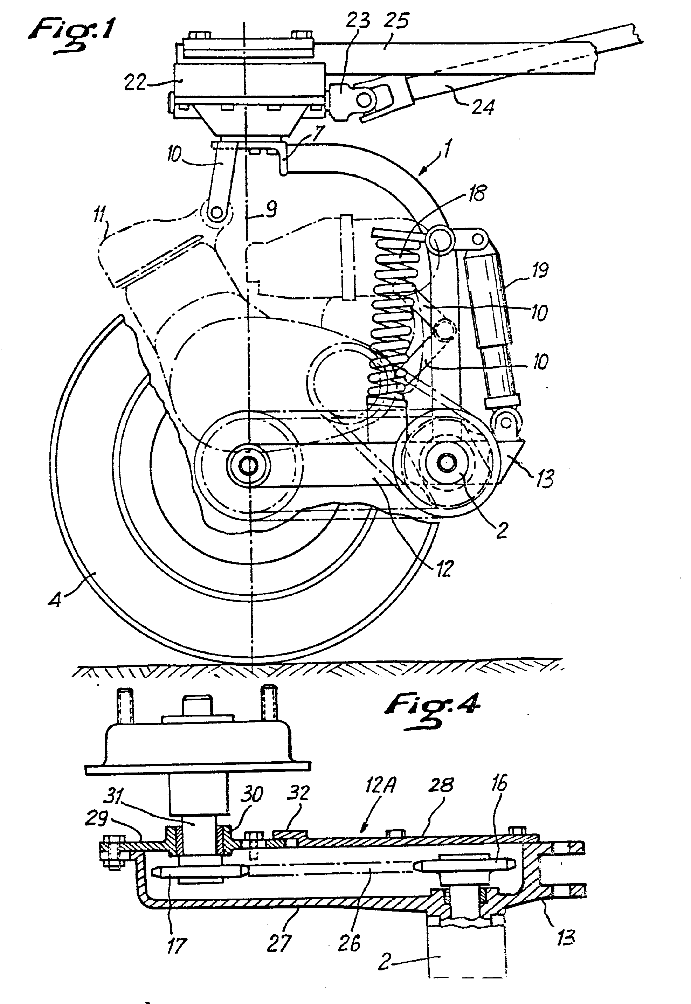

Un train avant selon l'invention comprend une ossature 1 qui repose par sa partie inférieure sur un carter 2 contenant deux essieux 3 par lesquels sont entraînées en rotation deux roues 4. La partie inférieure de l'ossature 1 a deux branches espacées 5, réunies au-dessus du carter 2 par une entretoise 6, qui sont sensiblement verticales. Dans la partie supérieure de l'ossature 1 les deux branches 5 sont fortement déportées vers l'avant, au-delà du carter 2, par exemple par une incurvation de 90° environ, comme on le voit sur la figure 1. En outre, les deux branches 5 se rapprochent l'une de l'autre, au-dessus de l'entretoise 6 et elles sont fixées à une plaque commune 7 à laquelle est attaché un pivot de direction 8, creux, ayant un axe de pivotement 9. La plaque commune 7 et l'entretoise 6 sont munies de pattes d'attache 10 disposées par paires et qui servent à la fixation d'un moteur 11, par exemple un moteur à essence représenté en trait mixte sur la figure 1 seulement.

Les roues 4 sont montées chacune à l'extrémité d'un bras 12 qui s'étend vers l'avant à partir du carter 2. Il est possible que les deux bras 12 s'écartent l'un de l'autre vers l'extérieur, pour donner une plus grande voie au train avant. Chaque bras 12 peut osciller par rapport au carter 2 et il a, de préférence, un prolongement 13 vers l'arrière au-delà du carter. A ce dernier, de préférence dans sa partie médiane, entre les branches 5 de l'ossature 1, est incorporé un différentiel 14. Celui-ci entraîne les deux essieux 3 qui s'étendent d'un côté et de l'autre, à l'intérieur du carter 2, ainsi qu'il est connu en soi.

Le moteur 11 est suspendu aux pattes 10 à l'intérieur du volume limité par les roues 4, le carter 2, la partie inférieure verticale et la partie supérieure déportée vers l'avant de l'ossature 1. L'agencement est tel que le centre de gravité du moteur 11 est sensiblement sur l'axe de pivotement 9 du pivot 8. Cet axe 9 est lui-même sensiblement vertical et il rencontre en son milieu la ligne droite qui joint les points de contact des roues 4 avec le sol. Pour le fonctionnement, l'arbre du moteur 11 est muni d'un pignon denté qui est réuni par une chaîne à une roue dentée 15 qui fait partie du différentiel 14. Les essieux 3 s'étendent dans le carter 2 au-delà des bras 12 et sont munis chacun d'une roue dentée 16. A l'extrémité de chaque bras 12 est monté un arbre libre en rotation qui porte une roue 4 sur le côté extérieur du bras 12 et une roue dentée 17 de l'autre côté par rapport au même bras 12. Les roues dentées 13 et 17 sont disposées en correspondance et sont réunies par une chaîne. De cette façon, le couple d'entraînement est transmis du moteur aux roues par l'intermédiaire du différentiel 14. Grâce à l'agencement général qui vient d'être décrit, on peut faire pivoter totalement le train avant de l'invention autour de l'axe 9 du pivot 8.

La suspension est assurée de façon tout à fait satisfaisante et à l'aide de moyens classiques en soi tels qu'un ressort à boudin 18 et un amortisseur 19, ou à l'aide de moyens équivalents. Ces moyens sont montés respectivement dans une position faiblement inclinée par rapport à la verticale d'une part entre le bras 12 et une branche 5 de l'ossature (pour le ressort 18 par exemple), d'autre part entre cette même branche 5 et le prolongement 13 du bras 12 (par exemple pour l'amortisseur 19).

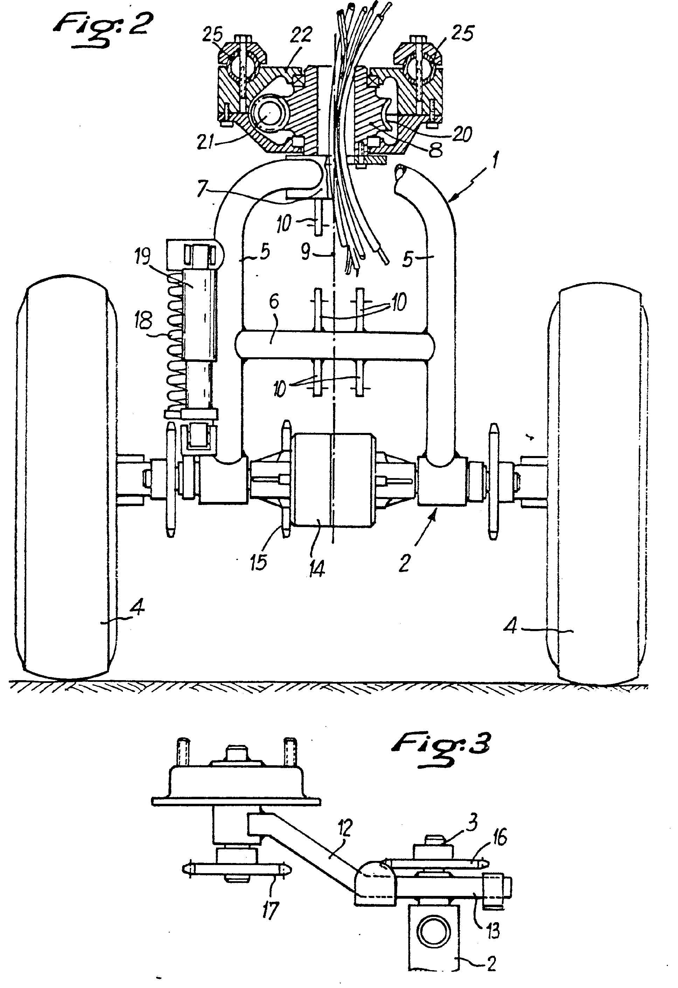

Le pivot 8 est creux comme on l'a dit plus haut et, comme son axe 9 est aussi l'axe de pivotement de l'ensemble du train avant, il peut servir de passage à tous les câbles et fils entre le moteur et l'intérieur du véhicule ainsi que le montre la figure 2. Ce pivot 8 fait corps avec une couronne dentée de direction 20 à laquelle est associé un élément de commande, par exemple une vis sans fin 21. L'ensemble est enfermé dans un boîtier 22 à travers la paroi duquel la vis sans fin 21 est accouplée, par l'intermédiaire d'un joint à cardan 23, à une barre de direction 24 à l'extrémité de laquelle est monté le volant du véhicule. Le boîtier 22 est conçu pour servir aussi à la fixation solide d'éléments tels que deux tubes 25 qui font partie du châssis du véhicule.

De cette façon, le train avant de l'invention peut être attaché facilement et rapidement à un châssis d'un véhicule; en outre, ce train avant peut pivoter par rapport au boîtier 22, réuni au châssis, d'un angle de 180° dans un sens et de 180° dans le sens opposé. On obtient donc la marche avant, la direction et la marche arrière du véhicule d'une manière très simple. Le moteur 11 est d'un type quelconque approprié; de préférence on utilise un moteur connu en soi ayant une boîte de vitesse incorporée procurant au moins deux rapports d'entraînement en marche avant des roues 4.

On peut séparer le train avant et le véhicule d'une façon simple et rapide, par exemple pour une réparation, ou pour remplacer en totalité le train avant ou encore pour pouvoir utiliser, à volonté, un même train avant avec plusieurs véhicules diversement carrossés.

On peut apporter à la réalisation décrite ci-dessus plusieurs variantes sans sortir pour autant du cadre de l'invention. Par exemple, l'élargissement de la voie des roues avant n'est pas toujours souhaitable.

Dans ce cas on peut adopter la construction de la figure 4 dans laquelle le bras 12A s'étend en ligne droite à partir de l'extrémité correspondante du carter 2. Les roues dentées 16 et 17 sont toujours en regard l'une de l'autre pour être réunies par une chaîne de transmission mais cette construction permet d'utiliser un bras 12A qui est creux et qui enferme les deux roues dentées et la chaîne. De préférence le bras 12A est composé de trois parties dont l'une 27 est creuse avec une bride de fixation périmétrique. Une seconde partie 28 est analogue à un couvercle qui est vissé à la bride de la partie 27 pour couvrir la roue dentée 16 et la majeure partie de la chaîne 26. La troisième partie 29 comprend un palier 30 dans lequel est guidé l'arbre 31 d'entraînement de la roue sur lequel est calée la roue dentée 17, à l'intérieur du bras creux 12A. La partie 29 est fixée aussi à l'aide de vis ou de boulons à la bride périmétrique de la partie 27 mais avec des trous allongés dans le sens de la chaîne 26. Ainsi, on peut régler la tension de cette dernière en faisant coulisser la partie 29 par rapport à la partie 27.

De préférence, la seconde partie 28 a, à sa partie extrême proche de la partie 29, une languette 32 sous laquelle est introduite cette partie 29. Ceci assure l'étanchéité du bras 12A; au besoin un joint est monté dans la face de la languette 32 qui est tournée vers la partie 29.

Selon une autre variante de réalisation, on peut disposer concentriquement l'amortisseur 19 et le ressort 18, par exemple à l'extrémité prolongée 13 du bras 12 ou 12A.

0001366

Revendications de brevet

1. Train avant à deux roues motrices et directrices pour véhicule automobile, ayant une voie substantiellement égale à la largeur de ce véhicule, comprenant un essieu contenu dans un carter avec un différentiel dans sa partie médiane, une ossature ayant une partie inférieure reposant sur le carter de l'essieu et une partie supérieure munie d'un pivot de direction ayant un axe de pivotement substantiellement vertical, caractérisé en ce que la partie supérieure de l'ossature est déportée en avant de l'essieu, les roues sont montées chacune respectivement sur un bras s'étendant vers l'avant à partir du carter de l'essieu, le moteur étant fixé à l'ossature à l'intérieur du volume limité par celle-ci et par les roues, et accouplé fonctionnellement au différentiel l'agencement étant tel que l'axe de pivotement du pivot passe sensiblement par le centre de gravité du moteur et rencontre en son milieu la ligne droite s'étendant entre les points de contact avec le sol de chacune des deux roues.

2. Train avant selon la revendication 1 caractérisé en ce que le pivot de direction porte une couronne dentée de direction avec laquelle il est calé en rotation et qui fait partie d'un organe de direction comprenant un élément de commande de cette couronne dentée, cet élément étant réuni au volant de direction du véhicule.

3. Train avant selon la revendication 2 caractérisé en ce que le pivot de direction est creux et il sert de passage aux fils et câbles de commande entre le moteur et l'intérieur du véhicule.

4. Train avant selon la revendication 2 caractérisé en ce que l'organe de direction est contenu dans un boîtier muni de moyens de fixation qui constituent les seuls moyens de solidarisation du train avant et du châssis du véhicule.

5. Train avant selon la revendication 1 caractérisé en ce que chaque bras s'étendant vers l'avant est monté sur le carter de l'essieu avec une possibilité d'oscillation par rapport à ce dernier, et des organes de suspension sont disposés entre chaque bras d'une part et l'ossature d'autre part.

6. Train avant selon la revendication 5 caractérisé en ce que chaque bras a un prolongement vers l'arrière au--delà de l'essieu, un ressort de compression est monté en avant de l'essieu entre chaque bras et l'ossature et un amortisseur est monté en arrière de l'essieu entre le prolongement de chaque bras et l'ossature.

7. Train avant selon l'une quelconque des revendications 1, 5, 6 caractérisé en ce que chaque bras est déporté vers l'extérieur par rapport à son articulation sur le carter de l'essieu et à son extrémité libre chaque bras est pourvu d'un arbre portant une roue du côté extérieur et un pignon denté du côté opposé de ce bras, tandis que l'essieu est prolongé vers l'extérieur au-delà du bras et porte un pignon denté, les deux pignons étant disposés en correspondance et réunis par une chaîne de transmission de couple.

8. Train avant selon les revendications 1 et 5 réunies caractérisé en ce que chaque bras s'étendant vers l'avant est rectiligne et constitué par une pièce creuse contenant deux roues dentées et une chaîne de transmission du couple du différentiel à la roue correspondante.

9. Train avant selon la revendication 8 caractérisé en ce que le bras creux est composé d'une partie creuse ayant une bride périmétrique et d'au moins une seconde partie fermant la partie creuse.

10. Train avant selon la revendication 9 caractérisé en ce que la seconde partie couvre la roue dentée proche du différentiel et une fraction de la longueur de la chaîne tandis qu'une troisième partie portant un palier pour l'arbre d'entraînement de la roue couvre le reste de la chaîne et la roue dentée associée à la roue, cette troisième partie étant coulissante par rapport à la première partie en permettant le réglage de la tension de la chaîne.

*Fig:1*

22

23   25

24

10    7    1

11    9

18

19

10

10

4    12    2    13

*Fig:4*

31    30    32    12A    28    16

29

17    27    26    13

2

_Fig:2_

_Fig:3_

0001366

**Office européen des brevets**

## RAPPORT DE RECHERCHE EUROPEENNE

Numéro de la demande

EP 78 40 0101

| | DOCUMENTS CONSIDERES COMME PERTINENTS | | |
|---|---|---|---|
| Catégorie | Citation du document avec indication, en cas de besoin, des parties pertinentes | Revendication concernee | |
| A | <u>FR - A - 2 034 639</u> (SCHEUERLE)<br><br>---- | 1 | |

**CLASSEMENT DE LA DEMANDE (Int. Cl.²)**

B 60 K 5/00

**DOMAINES TECHNIQUES RECHERCHES (Int. Cl.²)**

B 60 K 5/00
             7/00
B 62 D 7/00
            61/00
            63/00
            39/00
B 60 B 11/00

**CATEGORIE DES DOCUMENTS CITES**

X: particulièrement pertinent
A: arrière-plan technologique
O: divulgation non-ecrite
P: document intercalaire
T: théorie ou principe à la base de l'invention
E: demande faisant interference
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 28-11-1978 | PIRIOU |

OEB Form 1503.1   06.78